# EUROPÄISCHE PATENTANMELDUNG

(11) **EP 0 644 087 A1**
(43) Veröffentlichungstag der Anmeldung: **22.03.1995**
(21) Anmeldenummer: 94202558.6
(22) Anmeldetag: 07.09.1994
(51) Int. Cl.: B60R 21/16

(54) **Gassack-Aufprall-Schutzanordnung**

(30) Priorität: 11.09.1993 DE 4330871
(71) Anmelder: PARS Passive Rückhaltesysteme GmbH, 63755 Alzenau (DE)
(72) Erfinder: Hoffmann, Rainer, D-63755 Alzenau (DE); Fellhauer, Joachim, D-63741 Aschaffenburg (DE); Fahrländer, Dieter, D-63755 Alzenau (DE)
(74) Vertreter: Rieger, Harald, Dr.

(57) **Zusammenfassung**

Eine Gassack-Aufprall-Schutzanordnung für Kraftfahrzeuge, ist beifahrerseitig hinter einer im Armaturenbrett (2) angebrachten Austrittsöffnung (3) für den Gassack (4) eingebaut. Die dem auf dem Beifahrersitz sitzenden Fahrgast zugekehrte Begrenzungsfläche (7) des Gassacks besitzt im aufgeblasenen Zustand des Gassacks etwa Trapezform mit sich von unten nach oben verjüngender Begrenzungsfläche.

## Beschreibung

Die Erfindung betrifft eine Gassack-Aufprall-Schutzanordnung für Kraftfahrzeuge, vorzugsweise für Personenkraftwagen, die beifahrerseitig hinter einer im Armaturenbrett angebrachten Austrittsöffnung für den Gassack eingebaut ist und deren dem auf dem Beifahrersitz sitzenden Fahrgast zugekehrte Begrenzungsfläche des Gassacks im aufgeblasenen Zustand etwa Trapezform besitzt.

Eine solche, in der DE-C-32 10 043 beschriebene Gassackform besitzt zwei einander gegenüberliegende, etwa trapezförmige Begrenzungsflächen, wobei eine dieser trapezförmigen Begrenzungsflächen als dem Fahrgast zugewandte Aufprallfläche dient und die andere trapezförmige Begrenzungsfläche zumindest eine dem Gaszutritt dienende Öffnung aufweist, und der Gassack so im Kraftfahrzeug angeordnet ist, daß sich die trapezförmigen Begrenzungsflächen von oben nach unten verjüngen. Nun hat es sich gezeigt, daß solch eine Gassackform dann eine verminderte Schutzwirkung für Kopf und Halswirbel besitzt, wenn der auf dem Beifahrersitz sitzende Fahrgast mit einem Dreipunkt-Automatik-Sicherheitsgurt mit Gurtstraffer angegurtet ist. Im Falle eines Aufprallstoßes mit vergleichsweise größerer Winkelabweichung (> ± 20°) der Stoßrichtung erfolgt die Richtung der Kopfnickbewegung infolge der rotatorischen Seitenbewegung auf die Randbereiche der Aufprallfläche des Gassacks oder kann sogar außerhalb der Aufprallfläche des Gassacks liegen. Das bedeutet, daß die Kopfnickbewegung länger und dadurch die Halswirbelbelastung größer ist und ggf. sogar der Kopf auf das Armaturenbrett aufschlagen kann.

Es ist die Aufgabe der vorliegenden Erfindung, dem Gassack der eingangs beschriebenen Gassack-Aufprall-Schutzanordnung eine solche Konstruktionsform zu geben, daß dieser bei einem Aufprallstoß mit vergleichsweise größerer Winkelabweichung der Stoßrichtung das Verletzungsrisiko für Kopf und Halswirbel eines auf der Beifahrerseite sitzenden Fahrgasts, der mit einem Dreipunkt-Automatik-Sicherheitsgurt mit Gurtstraffer angegurtet ist, so niedrig wie möglich hält.

Die Lösung dieser Aufgabe geschieht dadurch, daß sich die trapezförmige Begrenzungsfläche des Gassacks von unten nach oben verjüngt und damit der Gassack in seinem unteren Bereich eine Breite besitzt, die gewährleistet, daß der Kopf eines auf dem Beifahrersitz angegurteten Fahrgasts im Falle eines Aufprallstoßes des Kraftfahrzeugs in den aufgeblasenen Gassack eintaucht.

Zweckmäßigerweise beträgt das Volumen des Gassacks 50 bis 75 Liter.

Im Rahmen der Ausgestaltung der Erfindung verhält sich die Länge der unteren Grundseite zur Länge der oberen Grundseite der trapezförmigen Begrenzungsfläche des Gassacks wie 1,5:1 bis 2:1. Durch die relativ große Breite des unteren Bereichs des Gassacks bekommt dieser mehr Tiefe, da der Gassack im aufgeblasenen Zustand bestrebt ist, die Idealform einer Kugel anzunehmen, so daß der durch den Gurt in Zusammenwirken mit dem Gurtstraffer auf dem Beifahrersitz im Falle eines Aufprallstoßes zurückgehaltene Fahrgast trotzdem noch relativ weit in den Gassack eintauchen kann. Da der obere Abschnitt des Gassacks im wesentlichen zur Abstützung an der Windschutzscheibe des Kraftfahrzeugs dient, kann die Breite des oberen Bereichs des Gassacks relativ klein gestaltet sein. Das durch die Verkleinerung in diesem Bereich verlorene Volumen ist im unteren Bereich des Gassacks in unvorteilhafter Weise aufgebaut.

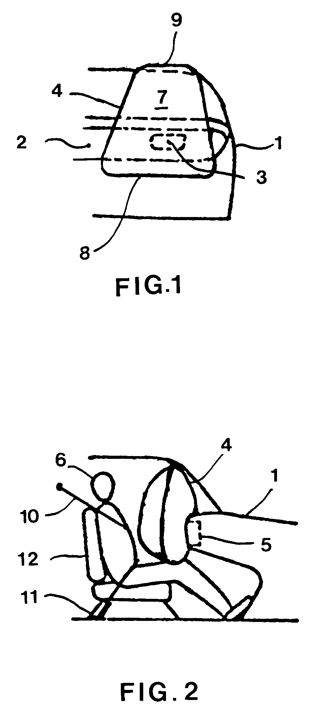

Ein Ausführungsbeispiel der Erfindung ist in der Zeichnung schematisch dargestellt und wird nachfolgend näher erläutert. Es zeigen
- Fig. 1: eine fahrgastseitige Ansicht des aufgeblasenen Gassacks
- Fig. 2: eine Seitenansicht des beifahrerseitig aufgeblasenen Gassacks
Die schematische Darstellung der Beifahrerseite eines Personenkraftwagens (1) zeigt eine im Armaturenbrett (2) angebrachte Austrittsöffnung (3) für den Gassack (4) der hinter der Austrittsöffnung (3) liegenden, nicht im einzelnen dargestellten Gassack-Aufprall-Schutzanordnung. Der Gassack (4), der durch den Gasgenerator (5) aufgeblasen ist, zeigt auf der dem Fahrgast (6) zugekehrten Seite eine Begrenzungsfläche (7) in der Form eines unsymmetrischen Trapezes, dessen untere Grundseite (8) länger als dessen obere Grundseite (9) ist. Der aufgeblasene Gassack (4), der ein relativ kleines Volumen von 60 Litern besitzt, ist in seinem unteren, bei einem Kopfaufprall eines mit einem Dreipunkt-Automatik-Sicherheitsgurt (10) mit Gurtstraffer (11) auf dem Beifahrersitz (12) angegurteten Fahrgasts (6) besonders wichtigen Bereich ausreichend breit, wenn bei einem Aufprallstoß die Nickbewegung des Kopfes deutlich außerhalb der vertikalen Mittelebene des Gassacks liegen sollte. Die Nickbewegung des Kopfs wird möglichst bald nach dem Aufprallstoß begrenzt, so daß der Fahrgast so früh wie möglich an dem Verzögerungsverlauf des Fahrzeugs teilnehmen kann, ohne daß die Gefahr von Kopf- und Halswirbel-Verletzungen besteht.

## Patentansprüche

1. Gassack-Aufprall-Schutzanordnung für Kraftfahrzeuge (1) vorzugsweise für Personenkraftwagen, die beifahrerseitig hinter einer im Armaturenbrett (2) angebrachten Austrittsöffnung (3) für den Gassack (4) eingebaut ist und deren dem auf dem Beifahrersitz (13) sitzenden Fahrgast (6) zugekehrte Begrenzungsfläche (7) im aufgeblasenen Zustand des Gassacks etwa Trapezform besitzt, dadurch gekennzeichnet, daß sich die trapezförmige Begrenzungsfläche (7) von unten nach oben verjüngt.

2. Gassack-Aufprall-Schutzanordnung nach Anspruch 1 dadurch gekennzeichnet, daß das Volumen des Gassacks (4) 50 bis 75 Liter beträgt.

3. Gassack-Aufprall-Schutzanordnung nach einem der Ansprüche 1 und 2 dadurch gekennzeichnet, daß das Verhältnis der Länge der unteren Grundseite zur Länge der oberen Grundseite der trapezförmigen Begrenzungsfläche (7) des Gassacks 1,5:1 bis 2:1 beträgt.
